# EUROPÄISCHE PATENTANMELDUNG

(11) **EP 2 824 801 A1**
(43) Veröffentlichungstag der Anmeldung: **14.01.2015**
(21) Anmeldenummer: 13176305.4
(22) Anmeldetag: 12.07.2013
(51) Int. Cl.: H02K 3/32, H02K 3/34, H02K 15/00, H02K 3/48, H02K 15/12

(54) **Verfahren zur Herstellung einer dynamoelektrischen rotatorischen Maschine und dynamoelektrische rotatorische Maschine**

(71) Anmelder: Siemens Aktiengesellschaft, 80333 München (DE)
(72) Erfinder: Grübel, André, 90768 Fürth (DE); Klaussner, Bernhard, 90408 Nürnberg (DE); Schirm, Dieter, 96149 Breitengüßbach (DE); Übler, Matthias, 92289 Ursensollen (DE)

(57) **Zusammenfassung**

Die Erfindung betrifft ein Verfahren zur Herstellung eines Rotors und/oder eines Stators einer dynamoelektrischen rotatorischen Maschine durch folgende Schritte:
- Herstellen von Formspulen aus einteiligem elektrisch leitfähigen Material oder vorisolierten oder lackierten elektrisch leitfähigen Drähten,
- Fixierung von Abstandshaltern an der Formspule in vorgebbaren Abständen,
- Einlegen der mit Abstandshaltern versehenen Formspule in Nuten eines Blechpakets eines Stators oder Rotors,
- Kontaktieren der einzelnen Formspulen zu Spulengruppen und Bildung eines Wicklungssystems eines Rotors und/oder Stators gemäß einem vorgegebenen Schaltungsplan,
- Isolation der Formspulen bzw. des Wicklungssystems in den Nuten durch Vollverguss insbesondere durch Vakuumvollverguss.

## Beschreibung

Die Erfindung betrifft ein Verfahren zur Herstellung einer dynamoelektrischen rotatorischen Maschine ebenso wie die dynamoelektrische rotatorische Maschine selbst.

Dynamoelektrische Maschinen, insbesondere dynamoelektrisch rotatorische Maschinen weisen ein geblechtes Stator- und ein geblechtes Rotorpaket auf, in denen sich vorzugsweise im Stator in axial verlaufenden Nuten elektrische Leiter befinden, die mit Permanentmagneten des Rotors oder einer stromdurchflossenen Wicklung des Rotors elektromagnetisch wechselwirken und somit einen Antrieb oder einen generatorischen Betrieb der dynamoelektrischen Maschine gewährleisten.

Die elektrischen Leiter in den axial verlaufenden Nuten sind gegenüber dem Erdpotential des Stator- oder Rotorblechpakets durch Isolationswerkstoffe beabstandet. Dies wird als Hauptisolation bezeichnet.

Der Abstand wird dabei über die Lagenzahl, der um die Leiter, also die Formspulen gewickelten bandförmigen Isolationswerkstoffe und gegebenenfalls zusätzliche Flächenisolierwerkstoffe sowie deren jeweiligen Dicke eingestellt.

Dabei werden die umwickelten Spulen in die Nuten des Stators oder Rotors eingepresst bzw. eingelegt, wodurch sich diese danach selbst ausrichten sollen. Um sicherzustellen, dass die eingelegten Spulen positionsgenau verbleiben, werden diese anschließend mittels eines Nutverschlussstreifens radial fixiert.

Die Herstellung einer derartigen Hauptisolierung aus Glimmerband oder Flächenisolierwerkstoffen ist ein zeit- und damit ressourcenraubender und bisweilen auch sehr fehlerbehafteter Prozess.

Ausgehend davon liegt der Erfindung die Aufgabe zugrunde, ein Verfahren zur Isolierung von elektrischen Leitern in Nuten zu schaffen, das weniger fehlerbehaftet als auch vergleichsweise zeitsparender gestattet die Isolierung von Wicklungen insbesondere der einzelnen Spulen einer dynamoelektrischen Maschine in den Nuten zu realisieren.

Die Lösung der gestellten Aufgabe gelingt durch ein Verfahren zur Herstellung eines Rotors und/oder eines Stators einer dynamoelektrischen rotatorischen Maschine durch folgende Schritte:
- Herstellen von Formspulen aus einteiligem elektrisch leitfähigen Material oder vorisolierten oder lackierten elektrisch leitfähigen Drähten,
- Fixierung von Abstandshaltern an der Formspule in vorgebbaren Abständen,
- Einlegen der mit Abstandshaltern versehenen Formspule in Nuten eines Blechpakets eines Stators oder Rotors,
- Kontaktieren der einzelnen Formspulen zu Spulengruppen und Bildung eines Wicklungssystems eines Rotors und/oder Stators gemäß einem vorgegebenen Schaltungsplan,
- Isolation der Formspulen bzw. des Wicklungssystems in den Nuten durch Vollverguss insbesondere durch Vakuumvollverguss.

Die Lösung der gestellten Aufgabe gelingt ebenso durch eine dynamoelektrische rotatorische Maschine mit einem aus axial geschichteten Bleche aufgebauten Stator und/oder Rotor, wobei sich zu einem zwischen Stator und Rotor befindlichen Luftspalt Nuten des Stators und/oder Rotors erstrecken, die mit Formspulen versehen sind, wobei in den Nuten jeweils in duroplastischer Vergussmasse eingebettete Formspulen vorgesehen sind, die einteiligem elektrisch leitfähigen Material oder vorisolierten oder lackierten elektrisch leitfähigen Drähten aufweisen.

Erfindungsgemäß erfolgt nunmehr die Befestigung der Spulen durch vorgeformte für die spezielle Nut geeignete Abstandshalter in axial vorgegebenen festgelegten regelmäßigen oder auch dementsprechend unregelmäßigen Abständen über den Nutbereich der Spule. Der Nutbereich der Spule ist dabei der Bereich der Spule, der sich innerhalb der axialen Länge des Blechpaketes des Stators oder Rotors befindet. Die Abstände und Anzahl der Abstandshalter pro Nut hängen dabei von der Gesamtgröße der Formspulen der axialen Länge des Stators oder des Rotors und deren Querschnitten der Formspulen und/oder Nuten ab.

Diese Abstandshalter zeichnen sich dadurch aus, dass sie vorzugsweise an ihren seitlichen Flanken so profiliert sind, dass nach dem Einlegen der Formspulen in die Nutgeometrie des Stators oder Rotors sich diese Abstandshalter nur unter erheblichen Kraftaufwand aus der Nut lösen lassen. Diese Positionierung der Abstandshalter in der Nut dient vorteilhafterweise dazu, dass für einen nachfolgenden Gießprozess von Isolationsmaterial in die Nut keine Verrückung der Formspulen oder anderer elektrischer Leiter erfolgen kann. Dies könnte im Betriebsfall der dynamoelektrischen Maschine dann zu elektrischen Überschlägen und damit zum Ausfall der Maschine führen.

Die Fixierung der Spule am Abstandshalter erfolgt über Friktionskräfte zwischen den Abstandshaltern und der Spulenoberfläche oder durch Einrastsicherungen an der Aussparungsnutöffnung des Abstandshalters.

Vorteilhafterweise ist dabei die Nut sogar ohne Nutverschluss auszugestalten. Die Isolation der einzelnen Spulen bzw. des gesamten Wicklungssystems erfolgt nunmehr durch einen Vakuumvollverguss mit duroplastischen Masse. Diese zeichnet sich insbesondere durch hohes elektrisches Isolationsvermögen zwischen den elektrischen Leitern und dem geerdeten Blechpaket, als auch durch eine gute Anbindung an die beschriebenen Abstandshalter das Blechpaket und die Formspulen der gesamten Teilleiterisolierung aus.

Die erfindungsgemäßen Abstandshalter selbst sind vorteilhafterweise aus duoplastischen oder thermoplastischen Kunststoffen und weisen u.a. zur Potentialsteuerung eine vorgebbare räumliche und mengenmäßige anorganischer und/oder organischer Füllstoffe auf.

Zur vergleichsweise besseren Anbindung an das Vergussmedium weisen diese Abstandshalter durch eine entsprechende Oberflächenbeschaffenheit aus. Dabei ist die Oberfläche nunmehr aufgerauht, porös oder mit haftbaren Materialien beschichtet als auch, da die Abstandshalter nach Aushärten des Vergusses nicht mehr notwendigerweise vorhanden sein müssen, löslich gegenüber dem Vergussmedium ausgebildet.

Ebenso können in den Abstandshalter auch mineralische hochgefüllte Massen für hochverdichtete formstabile Presskörper bzw. Strangpressprofil oder Extrusionsprofile zum Einsatz kommen. Diese werden je nach Gegebenheiten auf die erforderte Länge konfektioniert.

Vorteilhafterweise kann nunmehr aufgrund des neuen Verfahrens auf den Einsatz von bandförmigen Isolationsstoffen als Hauptisolierung von elektrischen Leitern wie Drahtbündel oder Formspulen verzichtet werden.

Der Einbau dieser elektrischen Leiter kann ohne aufwändige Bandisolationsprozesse an den einzelnen Formspulen erfolgen.

Für die Abstandshalter werden beispielsweise folgende hochtemperaturstabile Thermoplasten und/oder Elastomere eingesetzt PAEK, PI, PES, PPS, PPA, PAA, PFA sowie die einzelnen Familienmitglieder der Polyetherketone (PEK), wie z.B. PEKK, PEEEK, PEEKK und PEKEKK. Die Füllstoffe betragen dabei jeweils bis zu 70 Volumen-Prozent und weisen innerhalb der hochtemperaturstabilen Thermoplasten und Elastomere Glaskurzfaser, Glimmerpulver oder Metalloxide auf. Die Glaskurzfaser weisen dabei Längen von 10 µm bis max. 5mm auf und führen zu einer mechanischen Verstärkung. Längere Glasfasern erhöhen zwar die Viskosität erschweren aber eine Verarbeitung durch Spritzgußverfahren. Die eingesetzten Glaskurzfasern können direkt mit dem Extruder verarbeitet werden, so dass die Herstellung erfindungsgemäßer Abstandshalter vereinfacht wird.

Die Körnchen des Glimmerpulvers als Füllstoff mit Durchmessern < 1mm weisen eine anisometrische Geometrie auf.

Ein Verbinden der Abstandshalter mit den Blechpaketen in der Nut erfolgt durch Aufpressen auf eine heiße Nutinnenseite, z.B. PEK mit Blechpaket mit Temperaturen über 200° bis 400°C, vorteilhafterweise über 300°C und unter 425°C und insbesondere zwischen 325° und 400°C, da dies besonderes für die PEK vorteilhaft ist.

Die Abstandshalter können mit dem Blechpaket in der Nut auch durch Verwendung eines temperaturstabilen Klebers, z.B. auf Silikon(alkyd)basis fixiert werden. Ebenso kann der Abstandshalter mit dem Blechpaket in der Nut durch Friktionskräfte gewährleistet werden, z.B. durch, Einpressen in die Nut und einer Verfestigung durch einen anschließenden Imprägnierprozess.

Eine Profilierung des Abstandshalters kann sowohl zum Blechpaket und/oder zur Spule hin erfolgen. Die Profilierung hat neben einer erhöhten Reibung auch den Vorteil, dass sich die Vergussmasse in axialer Richtung verteilen kann.

Die Erfindung sowie vorteilhafte Ausgestaltungen der Erfindung können den beispielhaft dargestellten Ausführungen entnommen werden. Dabei zeigen:
- FIG 1: dem prinzipiellen Aufbau einer dynamoelektrischen rotatorischen Maschine,
- FIG 2: ein bisheriges Verfahren zur Isolierung,
- FIG 3: das erfindungsgemäße Prinzip,
- FIG 4: eine Längsschnittdarstellung.

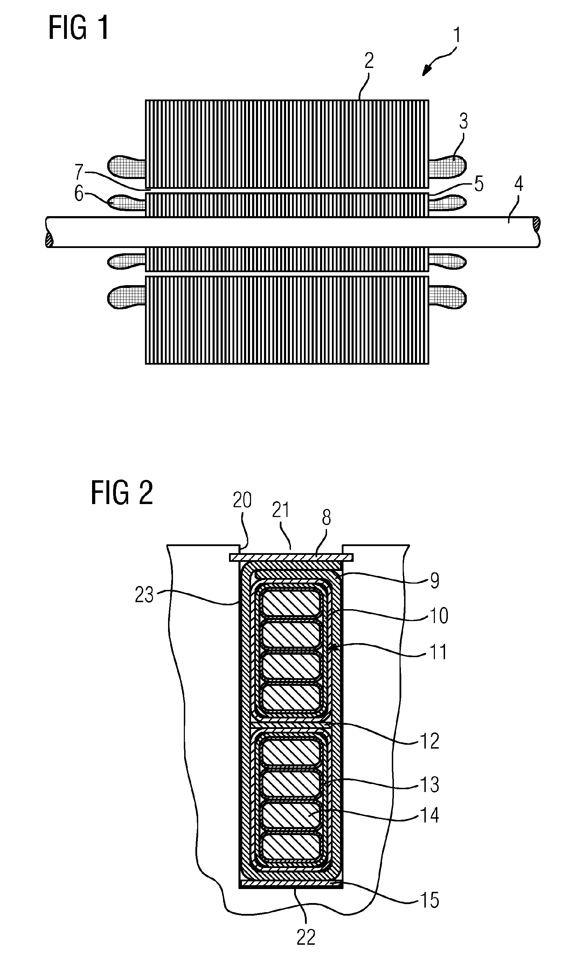

FIG 1 zeigt den elektrisch aktiven Teil einer dynamoelektrischen rotatorischen Maschine 1, die einen Stator 2 aufweist, mit einem axial geschichteten Blechpaket und einem Rotor 5, der drehfest mit einer Welle 4 verbunden ist, wobei das Blechpaket des Rotors 5 ebenfalls axial geschichtet aufgebaut ist.

In dieser Ausführungsform weist sowohl der Stator 2 als auch der Rotor 5 jeweils ein Wicklungssystem 3, 6 auf, das in axial verlaufenden Nuten 20, in dieser Darstellung nicht sichtbar, angeordnet ist. Die Wicklungssysteme 3, 6 bilden an den Stirnseiten von Stator 2 und Rotor 5 Wickelköpfe aus.

FIG 2 zeigt einen Querschnitt einer Nut 20, die ein Wicklungssystem 3 eines Stators 2 aufweist, das zweischichtig aufgebaut ist. Eine erste Schicht mit einem Leiter I befindet sich unmittelbar an der Nutöffnung 21, die zum Luftspalt 7 der dynamoelektrischen Maschine 1 weist. In der Nut 20 sind somit zwei Leiter I und II vorhanden, die jeweils mehrere Teilleiter 14 aufweisen, die in diesem Ausführungsbeispiel radial übereinander angeordnet sind. Leiter I und II werden dabei im Betrieb der dynamoelektrischen Maschine 1 von Strömen unterschiedlicher Phasen U, V, W durchflossen. Die Teilleiter 14 eines Leiters I oder II werden von Strömen der gleichen Phase durchflossen. Deshalb ist die Teilleiterisolation 13 vergleichsweise dünn ausgeführt, da sie nur Spannungsdifferenzen unterschiedlicher Windungen der Spule eines Leiters I oder II ausgesetzt ist.

In dieser Darstellung gemäß FIG 2, die das konventionelle Verfahren darstellen soll, ist die Nut 20 weiter durch einen Nutgrundstreifen 15 abgedeckt, auf dem die Nutauskleidung 9 als Hauptisolierung der Nutisolation ruht. Die beiden Leiter I und II sind durch einen Zwischenschieber 12 voneinander getrennt. Des Weiteren zeigt die Darstellung, dass nunmehr ausgehend von den Teilleitern 14, der vorteilhafterweise aus Kupfer oder einem anderen elektrisch gut leitfähigen Material ausgeführt ist, jeder Teilleiter 14 zunächst eine Teilleiterisolierung 13 aufweist. Daran schließt sich radial nach außen die Hauptisolierung 11 des Leiters I bzw. Leiters II an, die dann des Weiteren noch durch ein Glasgewebedeckband 10 und die Nutauskleidung 9 vom Blechpaket des Stators 2 beabstandet ist.

Die gesamte Anordnung in dieser Nut 20 und den anderen Nuten des Stators 2 und/oder Rotors 5 ist durch einen Nutverschlussstreifen 8 abgedeckt.

Dieser Aufbau zeigt, wie aufwändig und kompliziert das Positionieren der elektrischen Leiter I, II in der Nut 20 ist. Eine fehlerhafte Montage kann dabei nicht auszuschlossen werden, da beim Einsetzen des Wicklungssystems mit seinen Isolationsschichten durchaus ein Verrutschen oder ein Aufreißen der jeweiligen Schicht auftreten kann.

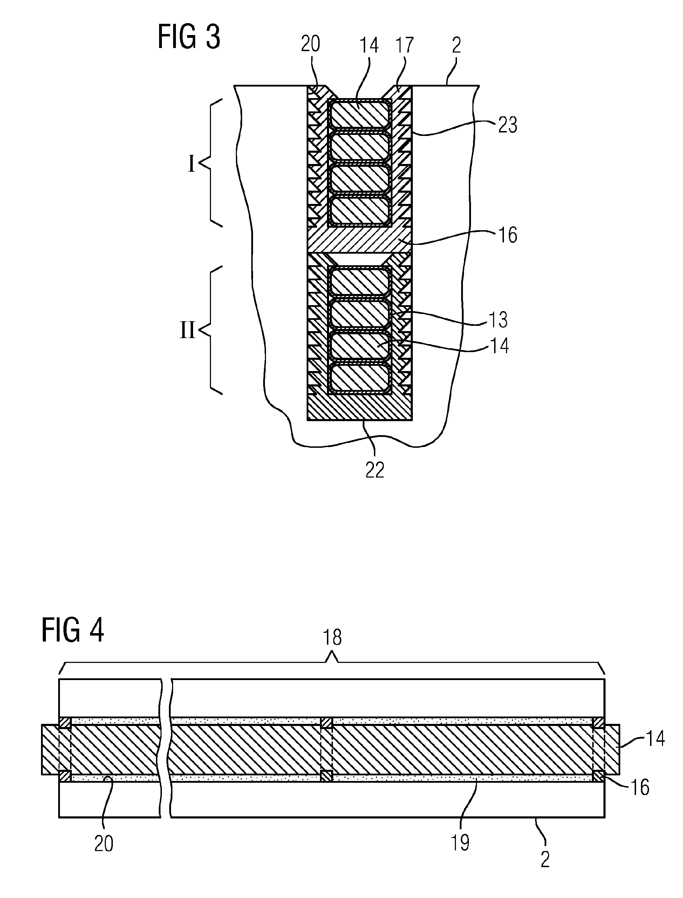

Das erfindungsgemäße Prinzip gemäß FIG 3 vereinfacht nunmehr das Verfahren der Isolation wesentlich. In einer Nut 20 mit einer Zweischichtwicklung mit den Leitern I und II werden diese durch erfindungsgemäße Abstandshalter und einer vorgegebenen Vergussmasse positioniert und isoliert.

Dabei wird nunmehr bei Herstellung des Wicklungssystems 3, 6 im Stator 2 oder Rotor 5 zunächst eine Formspule, also die Leiter I bzw. Leiter II aus massiven Teilleitern oder aus isolierten Drähten hergestellt, wobei diese Formspulen der Leiter I bzw. Leiter II dann radial übereinander geschichtet einen Teil des Wicklungssystems 3, 6 bilden und in gewissen Abschnitten, wie in FIG 4 dargestellt, mit Abstandshaltern 16 versehen werden. Der konstruktive Aufbau und das Verfahren beschränkt sich nicht nur auf Zweischichtwicklungen, sondern kann auch bei einer Einschicht- oder Mehrschichtwicklung realisiert werden.

In einer anderen nicht näher dargestellten Ausführungsform können die Teilleiter 14 eines Leiters auch nebeneinander und/oder radial übereinander angeordnet sein.

Im vorliegenden Fall ist nunmehr ein Paket mit einem Abstandshalter 16 zunächst am Nutgrund 22 der Nut 20 platziert und anschließend wird ein weiterer Abstandshalter 16 mit seinem Leiter II auf der ersten Schicht positioniert. Durch dieses Positionieren ist gewährleistet, dass der Leiter II im Nutbereich 18 auf der gesamten axialen Länge des Stators 2 oder des Rotors 5 einen äquidistanten vorgegebenen Abstand zum geerdeten Blechpaket des Stators 2 bzw. Rotors 5 aufweist. Damit kann nunmehr durch ein Vergussverfahren in diese verbleibenden Hohlräume der Nut 20 ein Isolationsmaterial eingebracht werden, das nach dem Aushärten einen stabilen Verbund des gesamten Wicklungssystems 3,6 bildet. Dies vereinfacht die Herstellung eben gegenüber der in FIG 2 dargestellten Verfahrensweise erheblich und ist bei weitem weniger fehlerbehaftet.

Der Abstandshalter 16 ist wie im vorliegenden Beispiel gemäß FIG 3 mit einer Profilierung, insbesondere mit Zähnen versehen, die ein Fixieren der Abstandshalter 16 in der Nut 20 erleichtern.

Der Abstandshalter 16 hat - wenn er an der Nutöffnung platziert ist - eine Einrastsicherung 17, wobei dabei zumindest ein Zahn des Abstandshalters 16 in eine axial verlaufende Ausnehmung des Zahns des Blechpakets eingreift. Ein Nutverschlussstreifen 8 zur Abdeckung des Wicklungssystems 3,6 in der Nut 20 ist deshalb nicht unbedingt erforderlich.

Diese Abstandshalter 16 lassen sich in der Nut 20 auch durch Klebeverbindungen positionieren.

FIG 4 zeigt einen elektrischen Leiter in einer Nut 20 wobei über den Nutbereich 18 axial verteilt Abstandshalter 16 in der Nut 20 positioniert sind, um den Leiter für den Vergussprozess zu fixieren.

## Patentansprüche

1. Verfahren zur Herstellung eines Rotors (5) und/oder eines Stators (2) einer dynamoelektrischen rotatorischen Maschine (1) durch folgende Schritte:
- Herstellen von Formspulen aus einteiligem elektrisch leitfähigen Material oder vorisolierten oder lackierten elektrisch leitfähigen Drähten,
- Fixierung von Abstandshaltern (16) an der Formspule in vorgebbaren Abständen,
- Einlegen der mit Abstandshaltern (16) versehenen Formspule in Nuten (20) eines Blechpakets des Stators (2) oder Rotors (5),
- Kontaktieren der einzelnen Formspulen zu Spulengruppen und Bildung eines Wicklungssystems (6,3) eines Rotors (5) und/oder Stators (2) gemäß einem vorgegebenen Schaltungsplan,
- Isolation der Formspulen bzw. des Wicklungssystems (6,3) in den Nuten (20) durch Vollverguss, insbesondere durch Vakuumvollverguss.

2. Dynamoelektrische rotatorische Maschine (1) mit einem aus axial geschichteten Bleche aufgebauten Stator (2) und/oder Rotor (5), wobei sich zu einem zwischen Stator (2) und Rotor (5) befindlichen Luftspalt (7) Nuten (20) des Stators (2) und/oder Rotors (5) erstrecken, die mit Formspulen versehen sind, wobei in den Nuten (20) jeweils in duroplastischer Vergussmasse eingebettete Formspulen vorgesehen sind, mit einteilig elektrisch leitfähigem Material oder vorisolierten oder lackierten elektrisch leitfähigen Drähten.

3. Dynamoelektrische rotatorische Maschine (1) nach Anspruch 1, **dadurch gekennzeichnet , dass** die Formspulen zumindest durch Abstandshalter (16) in den Nuten (20) gehalten sind.

4. Dynamoelektrische rotatorische Maschine (1) nach Anspruch 1 oder 2, **dadurch gekennzeichnet , dass** die Abstandshalter (16) zumindest seitlich an den Kontaktflächen mit den Seitenwände der Nut (20) so profiliert sind, dass nach dem Einlegen in die Nutgeometrie von Stator (2) und/oder Rotor (5) sie sich nur unter erheblichem Kraftaufwand wieder lösen lassen.

5. Dynamoelektrische rotatorische Maschine (1) nach einem der vorhergehenden Ansprüchen, **dadurch gekenn**- **zeichnet** , dass die Abstandshalter (16) aus duroplastischem oder thermoelastischen Kunststoffen aufgebaut sind und anorganische oder organische Füllstoffe aufweisen.

6. Dynamoelektrische Maschine (1) nach Anspruch 5, **da** - **durch gekennzeichnet** , dass die Abstandshalter (16) eine Oberflächenbeschaffenheit aufweisen, die aufgeraut, porös, oder beschichtet ausgeführt ist oder durch Vergussmedium löslich ist.
